# EUROPEAN PATENT SPECIFICATION

(11) **EP 2 045 205 B1**
(45) Date of publication and mention of the grant of the patent: **04.07.2012**
(21) Application number: 07117868.5
(22) Date of filing: 04.10.2007
(51) Int. Cl.: B66F 9/075, B60L 7/26, B62B 3/06, B62D 51/04

(54) **Industrial truck**
Flurförderzeug
Véhicule industriel

(43) Date of publication of application: 08.04.2009
(73) Proprietor: BT Products AB, 595 81 Mjölby (SE)
(72) Inventor: Lundén, Mats, 595 52, Mjölby (SE)
(74) Representative: Börlin, Maria

(56) References cited:
- EP-A- 0 595 445
- EP-A- 0 865 959
- EP-A- 1 712 401
- WO-A-99/16636
- US-A- 2 399 605
- US-A- 2 645 297

## Description

### TECHNICAL FIELD

The present invention relates to an industrial tiller truck having an improved braking system.

### BACKGROUND ART

An industrial tiller truck is a materials handling truck which the operator normally walks beside and controls by means of a pivoted tiller arm. Two load engaging lift forks project from the truck body.

Document EP0865959 A1 discloses an industrial truck of this kind, which also incorporates a mechanical parking brake.

Document US-A-2 645 297 discloses another industrial truck of this kind, wherein the brake is activated when the tiller arm is pivoted to a predetermined position.

The objective of the present invention is to provide an industrial tiller truck with a quick brake demand response and an efficient braking with reduced brake wear.

### SUMMARY OF THE INVENTION

In accordance with the present invention, in order to meet the objective above, the industrial tiller truck having a pivoted tiller arm for controlling the truck, and a drive motor for driving the truck, further comprises a dual braking system enabling a dual braking action. The dual braking system is adapted to make use of the drive motor for motor-braking in combination with an electromechanical brake for mechanical braking.

The dual braking system entails a comparatively short braking distance. Also, the wear of the electromechanical brake is reduced.

The dual braking system of the industrial truck can further comprise a brake control unit, by means of which the motor-braking and the mechanical braking can be combined in an advantageous manner.

Further, according to the invention, the dual braking system can be activated when the tiller arm is pivoted to a predetermined position. Preferably, the dual braking system can be adapted to gradually increase the braking force as the tiller arm is pivoted. Said predetermined positions can be a substantially vertical or a substantially horizontal position. Hereby, the operator is able to use the tiller arm for braking the truck according to the prevailing situation.

In order to achieve a quick brake demand response, while reducing the risk for locking the drive wheel upon braking, the dual braking system can make use of the drive motor and the electromechanical brake in succession. In order to further reduce wear and the risk for locking the drive wheel, the dual braking system can be adapted to in succession initiate the motor-braking and the mechanical braking

### DETAILED DESCRIPTION

The industrial tiller truck of the present invention will now be described, with reference to the enclosed schematic drawing, by way of example only. This disclosure is not intended to limit the scope of the enclosed claims in any way.

An industrial tiller truck 1 is a materials handling truck which the operator walks beside and controls by means of a tiller arm 2. However, the truck can also be furnished with a platform (not shown) on which an operator can stand and drive the truck. Two lift forks 3 project from the truck body 4. These forks 2 engage the load, normally a pallet, which is to be handled.

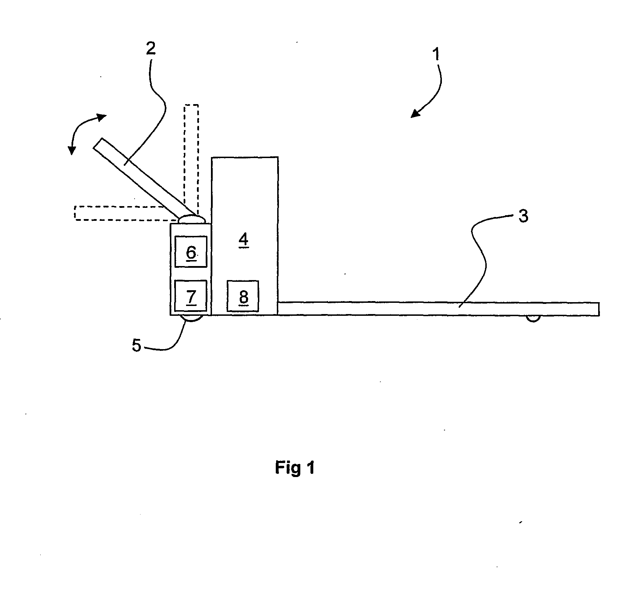

Figure 1 illustrates a tiller truck 1 with a tiller arm 2 that is pivotally connected to a truck body 4. A handle (not shown) is arranged at the distal end of the tiller arm 2. The pivotal connection of the tiller arm offers the operator the possibility to control the truck with the handle at a desired height. At the respective end positions, e.g. when pivoted virtually horizontal or virtually vertical, the tiller arm can be used for braking the truck. In figure 1, two suggested extreme positions, a horizontal position and a vertical position, of the tiller arm 2 are indicated in dashed lines.

The tiller arm is connected to a drive wheel 5, by means of which the industrial truck can be steered sideways and accelerated or decelerated. In order to steer the truck sideways, the operator uses the tiller arm handle to turn the drive wheel 5. A speed control lever, or a similar control device, is provided on the handle to enable the operator to accelerate or decelerate the truck.

The drive wheel 5 is driven by a drive motor 6, and an electromechanical brake 7 is provided for braking the drive wheel 5.

A brake control unit 8 controls the brake action of the drive wheel 5. The brake control unit 8 communicates with the handle speed control lever, the motor 6 and the electromechanical brake 7. Said control unit 8 can be a separate unit or be part of another control unit of the industrial truck, e.g. a motor control unit.

Now, when the operator uses the speed control lever on the handle to decrease the truck speed, a lever brake signal is received by the brake control unit 8. In response, the brake control unit 8 manoeuvres the drive motor 6 to induce motor-braking. The speed control lever is progressive, thus the brake control unit 8 can apply an appropriate motor-braking moment in correspondence with the magnitude of the speed decrease demand.

As mentioned above, also the tiller arm 2 can be used to decrease the truck speed. A pivoting detection device (not shown) is provided to monitor the angle of the tiller arm 2. The pivoting detection device is also connected to the brake control unit 8. When the operator pivots the tiller arm 2 to a predetermined position, i.e. a predetermined angle with respect to the truck body 4, the brake control unit 8 receives a tiller arm brake signal from the pivoting detection device. Such tiller arm brake signal triggers the brake control unit 8 to induce motor-braking by means of the drive motor 6. Also, the control unit 8 can activate mechanical braking by means of the electromechanical brake 7.

When the brake control unit 8 acts to brake the industrial truck in response to the tiller arm 2 position, the unit 8 can induce motor-braking, by means of the drive motor 6, and mechanical braking, by means of the electromechanical brake 7, simultaneously. However, mechanical braking is normally associated with a certain delay due to the time needed to e.g. de-energize an electromagnetic coil of the brake, and due to the time needed for the plain physical movement of mechanically interacting parts of the brake. Thus, even if the brake control unit 8 simultaneously sends brake activation signals to both the motor 6 and to the electromagnetic brake 7, only motor-braking by means of the motor 6 will be introduced initially. After a certain delay, the length of which depends on the design of the electromechanical brake 7, electromechanical braking will follow.

Additionally, when the brake control unit 8 acts to brake the industrial truck in response to the tiller arm 2 position, the activation of the electromechanical brake 7 can be postponed deliberately. Such deliberate time shift between the initiation of the motor-braking and the initiation of the electromechanical braking is accomplished by the brake control unit 8.

An advantage associated with the delayed initiating of the electromechanical braking is that a larger part of the total brake energy needed will be accounted for by the motor-braking, which is achieved by the drive motor 6. Thus, the wear of the electromechanical brake 7 is reduced. Also, the risk of locking the drive wheel, especially when operating on slippery ground, is reduced. If the drive wheel is locked, the industrial truck slides on the ground and is difficult to control. Further, the braking distance increases.

The dual braking system 6, 7, 8 of the invention, i.e. the control unit commanded combination of motor-braking and electromechanical braking based on the tiller arm 2 position, is advantageous in that two systems are operative to reduce the industrial truck speed. Thus, in the event of failure of one of the braking devices, i.e. drive motor failure or electromechanical brake failure, the other braking device will be operative to brake the truck. Further, the quick brake demand response of motor-braking combined with the efficient electromechanical braking leads to a short braking distance.

The pivoting detection device, monitoring the angle of the tiller arm 2, can be progressive. Hereby, the brake control unit can apply braking forces which vary depending on the tiller arm angle 2. This enhances the operators capability to use the tiller arm 2 angle to brake the truck 1 in accordance with prevailing situations. For example, a tiller arm angle of 0° or 90° (horizontal and vertical position in figure 1, respectively), with respect to the truck body, may imply maximal braking force. Slightly deviating angles, e.g. 5° and 85°, with respect to the truck body, may imply 50 % braking force, whereas at tiller arm 2 angles ranging from 10° to 80°, the control unit 8 does not activate braking at all. In this connection, the control unit 8 may combine motor-braking with electromechanical braking only at maximal braking force. Or, the electromechanical braking may be increasingly activated from angles of e.g. 5° and 85°, respectively. Motor-braking can be put to use throughout the entire tiller arm 2 braking angle range; 0-10° and 80-90°.

It is also possible set the control unit 8 to only activate braking at one extreme tiller arm position; at 0° or 90°, or, where a progressive pivoting detection device is used; at 0-10° or 80-90°. This is advantageous when the operator needs to be able to control the tiller truck 1 while keeping the tiller arm 2 at an extreme position, e.g. when operating in tight places, where the operator must walk right behind the truck 1 with the tiller arm 2 directed upwards (0°).

## Claims

1. Industrial tiller truck (1), comprising
a pivoted tiller arm (2) for controlling the industrial tiller truck (1), and
a drive motor (6) for driving the industrial tiller truck (1),
**characterised in that** the industrial tiller truck (1) further comprises
a dual braking system (6, 7, 8), which enables a dual braking action, wherein said dual braking system (6, 7, 8) is adapted to make use of the drive motor (6) for motor-braking in combination with an electromechanical brake (7) for mechanical braking, wherein the dual braking system (6, 7, 8) is adapted to be activated when the tiller arm (2) is pivoted to a predetermined position.

2. Industrial truck according to claim 1, wherein the dual braking system further comprises a brake control unit (8)..

3. Industrial truck according to claim 1, wherein the dual braking system (6, 7, 8) is adapted to gradually increase the braking force as the tiller arm (2) is pivoted.

4. Industrial truck according to claim 1, wherein the dual braking system (6, 7, 8) is activated when the tiller arm (2) is pivoted to a substantially vertical or a substantially horizontal position.

5. Industrial truck according any one of claims 1 to 4, wherein the dual braking system (6, 7, 8) is adapted to make use of the drive motor (6) and the electromechanical brake (7) in succession for the braking of the industrial tiller truck (1).

6. Industrial truck according any one of claims 1 to 4, wherein the dual braking system (6, 7, 8) is adapted to in succession initiate the motor-braking of the drive motor (6) and the mechanical braking of the electromechanical brake (7).

## Patentansprüche

1. Industrieller Flurförderer (1), aufweisend
einen schwenkbaren Deichselarm (2) zum Steuern des industriellen Flurförderers (1), und
einen Antriebsmotor (6) zum Antreiben des industriellen Flurförderers (1),
**dadurch gekennzeichnet, dass** der industrielle Flurförderer (1) ferner aufweist:
ein Dualbremssystem (6, 7, 8), das eine Dualbremsbetätigung ermöglicht, wobei das Dualbremssystem (6, 7, 8) vom Antriebsmotor (6) zum Motorbremsen in Kombination mit einer elektromechanischen Bremse (7) zum mechanischen Bremsen Gebrauch machen kann, wobei das Dualbremssystem (6, 7, 8) aktiviert werden kann, wenn der Deichselarm (2) zu einer bestimmten Position geschwenkt ist.

2. Industrieller Förderer gemäß Anspruch 1, bei dem das Dualbremssystem ferner eine Bremssteuereinheit (8) aufweist.

3. Industrieller Förderer gemäß Anspruch 1, bei dem das Dualbremssystem (6, 7, 8) die Bremskraft graduell erhöhen kann, wenn der Deichselarm (2) geschwenkt wird.

4. Industrieller Förderer gemäß Anspruch 1, bei dem das Dualbremssystem (6, 7, 8) aktiviert ist, wenn der Deichselarm (2) zu einer im Wesentlichen vertikalen oder einer im Wesentlichen horizontalen Position geschwenkt ist.

5. Industrieller Förderer gemäß einem der Ansprüche 1 bis 4, bei dem das Dualbremssystem (6, 7, 8) zum Bremsen des industriellen Flurförderers (1) vom Antriebsmotor (6) und von der elektromechanischen Bremse (7) nacheinander Gebrauch machen kann.

6. Industrieller Förderer gemäß einem der Ansprüche 1 bis 4, bei dem das Dualbremssystem (6, 7, 8) nacheinander das Motorbremsen des Antriebsmotors (6) und das mechanische Bremsen der elektromechanischen Bremse (7) initiieren kann.

## Revendications

1. Chariot de manutention à timon (1) comprenant :
un bras de timon pivotant (2) pour commander le chariot de manutention à timon (1), et
un moteur d'entraînement (6) pour entraîner le chariot de manutention à timon (1),
**caractérisé en ce que** le chariot de manutention à timon (1) comprend en outre :
un double système de freinage (6, 7, 8) qui permet une action de double freinage, dans lequel ledit double système de freinage (6, 7, 8) est adapté pour utiliser le moteur d'entraînement (6) pour le frein moteur en combinaison avec un frein électromécanique (7) pour le freinage mécanique, dans lequel le double système de freinage (6, 7, 8) est adapté pour être activé lorsque le bras de timon (2) est pivoté dans une position prédéterminée.

2. Chariot de manutention selon la revendication 1, dans lequel le double système de freinage (6, 7, 8) comprend en outre une unité de commande de frein (8).

3. Chariot de manutention selon la revendication 1, dans lequel le double système de freinage (6, 7, 8) est adapté pour augmenter progressivement la force de freinage à mesure que le bras de timon (2) est pivoté.

4. Chariot de manutention selon la revendication 1, dans lequel le double système de freinage (6, 7, 8) est activé lorsque le bras de timon (2) est pivoté dans une position sensiblement verticale ou dans une position sensiblement horizontale.

5. Chariot de manutention selon l'une quelconque des revendications 1 à 4, dans lequel le double système de freinage (6, 7, 8) est adapté pour utiliser le moteur d'entraînement (6) et le frein électromécanique (7) successivement pour freiner le chariot de manutention à timon (1).

6. Chariot de manutention selon l'une quelconque des revendications 1 à 4, dans lequel le double système de freinage (6, 7, 8) est adapté pour déclencher successivement le frein moteur du moteur d'entraînement (6) et le freinage mécanique du frein électromécanique (7).
